# EUROPÄISCHE PATENTSCHRIFT

(11) **EP 0 444 257 B1**
(45) Veröffentlichungstag und Bekanntmachung des Hinweises auf die Patenterteilung: **04.05.1994**
(21) Anmeldenummer: 90123182.9
(22) Anmeldetag: 03.12.1990
(51) Int. Cl.: G09F 7/18, B60R 13/10

(54) **Vorrichtung zur Aufnahme eines Tafelelements**
Device for receiving a sign
Dispositif pour la réception d'une plaque

(30) Priorität: 28.02.1990 DE 4006213
(43) Veröffentlichungstag der Anmeldung: 04.09.1991
(73) Patentinhaber: Walz, Thomas, D-89160 Dornstadt (DE)
(72) Erfinder: Walz, Thomas, W-7901 Lonsee (DE); Walz, Oliver, W-7901 Lonsee (DE)
(74) Vertreter: Munk, Ludwig, Dipl.-Ing.

(56) Entgegenhaltungen:
- EP-A- 0 197 472
- EP-A- 0 277 523
- DE-A- 3 742 428
- DE-U- 8 716 019

## Beschreibung

Die Erfindung betrifft eine Vorrichtung gemäß dem Oberbegriff des Anspruchs 1.

Eine Vorrichtung dieser Art ist aus der DE-PS 35 21 014 bekannt. Bei dieser bekannten Anordnung sind die Stützelemente als im Bereich des Einsteckkanalbodens fest angeformte Leisten ausgebildet. Das Tafelelement muß dabei zunächst über diese Leisten hinweggekippt und anschließend auf diese Leisten hinaufgehoben werden, die praktisch eine stufenförmige Erhöhung des Einsteckkanalbodens bilden. Die Montage des Tafelelements erweist sich daher bei dieser bekannten Anordnung als sehr umständlich und nicht bedienungsfreundlich genug. Zudem ist der erzielbare Halt nicht zuverlässig genug. Abgesehen davon ist die bekannte Anordnung überhaupt nur funktionsfähig, wenn der gesamte Träger eine hohe Labilität aufweist, was sich ebenfalls ungünstig auf die erzielbare Haltbarkeit und Sicherheit auswirkt.

Hiervon ausgehend ist es daher die Aufgabe der vorliegenden Erfindung, eine Vorrichtung eingangs erwähnter Art mit einfachen und kostengünstigen Mitteln so zu verbessern, daß eine hohe Trägerstabilität, ein zuverlässiger Halt des Tafelelements sowie eine bedienungsfreundliche Handhabung gewährleistet sind.

Diese Aufgabe wird erfindungsgemäß durch die kennzeichnenden Maßnahmen des Anspruch 1 gelöst.

Infolge der Verwendung von zunächst vom Träger getrennten, erst nach Einlegen des Tafelelements zur Bewerkstelligung des gewünschten Stützeingriffs in Stellung bringbaren Stützeinsätzen gestaltet sich die Montage des Tafelelements als sehr einfach. Der Träger selbst kann dabei in vorteilhafter Weise sehr starr und stabil sein. Hinzu kommt, daß im Bereich der Einsteckkanäle vergleichsweise wenig Bewegungsspiel benötigt wird, was sich ebenfalls vorteilhaft auf die Erzielbarkeit eines exakten, sauberen Sitzes des Tafelelements auswirkt. Zudem lassen sich mit Hilfe der erfindungsgemäßen Stützeinsätze auch Maßtoleranzen im Bereich des Tafelelements ausgleichen. Mit den erfindungsgemäßen Maßnahmen wird die gestellte Aufgabe somit auf höchst einfache und kostengünstige Weise gelöst.

Vorteilhafte Ausgestaltungen und zweckmäßige Weiterbildungen der übergeordneten Maßnahmen sind in den Unteransprüchen angegeben. So können die Stützelemente mit besonderem Vorteil als Rastelemente ausgebildet sein, die in die zugeordneten Ausnehmungen vorzugsweise lösbar einrastbar sind. Diese Maßnahmen ermöglichen in vorteilhafter Weise eine Schnellmontage der Stützelemente, indem diese einfach in Rasteingriff gebracht werden.

Eine weitere vorteilhafte Maßnahme kann darin bestehen, daß zumindest der in Einschubrichtung vordere Endbebereich der Stützelemente federnd ausgebildet ist. Diese Maßnahme ermöglicht in vorteilhafter Weise eine spielfreie Einspannung des Tafelelements auch im Falle größerer Maßtoleranzen im Bereich des Tafelelements.

Gemäß einer besonders zu bevorzugenden Ausbildung der übergeordneten Maßnahmen können die als Rastelemente fungierenden Stützelemente einen in sich geschlossenen, umlaufenden, unausgefachten Rahmen aufweisen, dessen seitliche Schenkel zweckmäßig mit seitlich vorspringenden Rastzähnen versehen sind. Diese Maßnahmen ergeben ein kombiniertes Rast- und Federelement, das einerseits genügend Elastizität besitzt, um eine spielfreie Einspannung des Tafelelements zu erreichen, und das andererseits aufgrund seiner Formsteifigkeit eine vergleichsweise große Federhärte besitzt, so daß sich im montierten Zustand eine quasistarre Anordnung und damit eine erschütterungssichere, klapperfreie Halterung ergibt.

Eine weitere zweckmäßige Maßnahme kann darin bestehen, daß jeweils zwei hintereinander angeordnete Rastzähne vorgesehen sind. Diese Maßnahmen ermöglicht in vorteilhafter Weise eine werksseitige Vormontage der Rastelemente. Mit Hilfe der ersten Rastzähne können die Rastelemente verlustsicher am Träger gehaltert werden, ohne die Einsetzbarkeit des Tafelelements zu behindern. Nach Einsetzen des Tafelelements brauchen die Rastelemente nur noch bis zum Einrasten der zweiten Rastzähne vorgeschoben werden.

Eine weitere, besonders zu bevorzugende Maßnahme kann darin bestehen, daß die jeweils einem als Rastelement ausgebildeten Stützelement zugeordneten Ausnehmungen des Trägers wenigstens eine im Bereich des mit einem Rastzahn zum Eingriff kommenden Ausnehmungsrands vorgesehene Kerbe aufweisen, die zweckmäßig über die ganze Wanddicke durchgeht. Diese Kerbe ermöglicht in vorteilhafter Weise die Einführung einer Klinge, beispielsweise eines Schraubenziehers oder dergleichen, zum Entrasten des Rastelements. Hierdurch ist daher eine einfache Demontage von als Rastelementen ausgebildeten Stützelementen möglich. Gleichzeitig wird jedoch sichergestellt, daß dies nicht ohne Zuhilfenahme eines Werkzeugs erfolgen kann, was aus Gründen der Sicherheit erwünscht ist.

Weitere vorteilhafte Ausgestaltungen und zweckmäßige Fortbildungen der übergeordneten Maßnahmen sind in den restlichen Unteransprüchen und der nachstehenden Beispielsbeschreibung enthalten.

Nachstehend werden zwei besonders bevorzugte Ausführungsbeispiele der Erfindung anhand der Zeichnung näher erläutert.

Hierbei zeigen:
- Figur 1: eine Vorderansicht eines erfindungsgemäßen KFZ-Kennzeichenträgers teilweise im Schnitt,
- Figur 2: einen im Bereich eines Stützelements geführten Vertikalschnitt durch die Anordnung gemäß Figur 1,
- Figur 3: einen neben einem Stützelement geführten Vertikalschnitt durch die Anordnung gemäß Figur 1,
- Figur 4: eine Teildraufsicht auf den der Figur 1 zugrundeliegenden Kennzeichenträger,
- Figur 5: eine Vorderansicht eines weiteren erfindungsgemäßen Kennzeichenträgers in Fig. 1 entsprechender Darstellung und
- Figur 6: einen Vertikalschnitt durch den Kennzeichenträger gemäß Fig. 5.

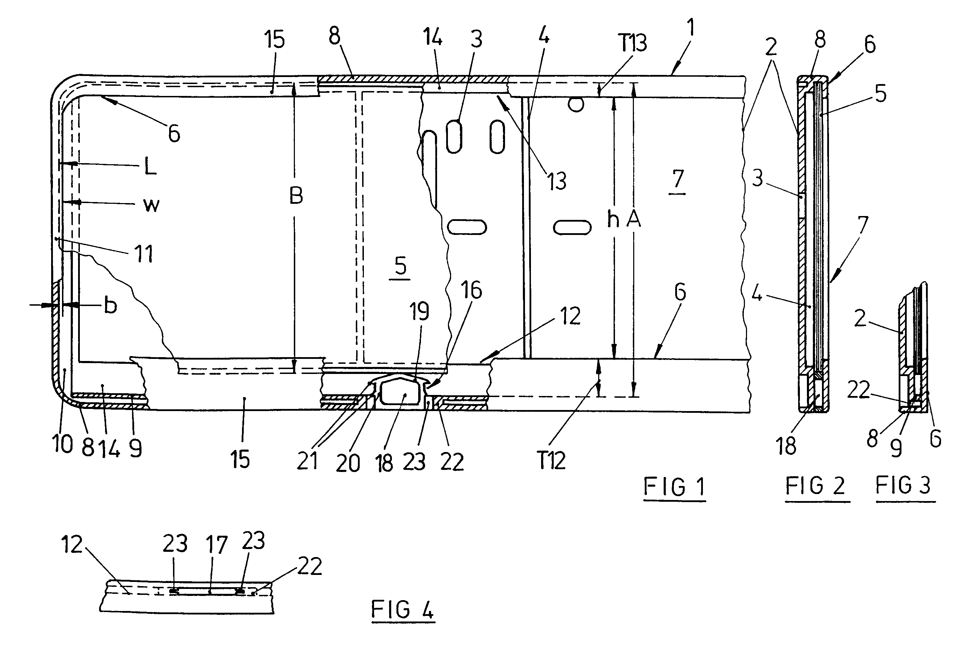

Der den Figuren 1 - 4 zugrundeliegende Kennzeichenträger 1 enthält eine massive Rückwand 2, die mit nach einem bestimmten Lochbild angeordneten Ausnehmungen 3 zum Durchstecken von Halteschrauben versehen ist. Um Platz für die Schraubenköpfe zu schaffen, ist die Rückwand 2 frontseitig mit aufgesetzten Rippen 4 versehen, deren erhöhte Vorderseite eine rückwärtige Auflage für ein in den Träger 1 einsetzbares Kennzeichenschild 5 bildet.

Parallel zum Rückwand 2 ist ein hiervon distanzierter, frontseitiger Blendrahmen 6 vorgesehen. Dieser umlaufende Blendrahmen 6 begrenzt ein Sichtfenster 7, durch das das zwischen Rückwand 2 und Blendrahmen 6 einsetzbare Kennzeichenschild 5 sichtbar ist. Die lichte Länge und Höhe des Sichtfensters 7 sind kleiner als die Außenmaße des Schilds 5, so daß dessen Rand vom umlaufenden Blendrahmen 6 übergriffen wird. Der umlaufende Blendrahmen 6 ist als Randflanschanordnung eines umlaufenden Rahmens 8 ausgebildet, der die äußere Trägerbegrenzung bildet.

Im Bereich des oberen Trägerrands bildet der Rahmen 8, wie Figur 2 am besten erkennen läßt, einen den Blendrahmen 6 mit der Rückwand 2 verbindenden Steg. Im Bereich des unteren Trägerrands ist, wie Figur 3 zeigt, ein vom Rahmen 8 untergriffener, separater Steg 9 zur Verbindung des Blendrahmens 6 mit der Rückwand 2 vorgesehen. Im Bereich der seitlichen Flanken des Trägers 1 sind, wie Figur 1 links zeigt, die Rückwand 2 und der Blendrahmen 6 nicht miteinander verbunden. Die Rückwand 2 endet hier dementsprechend mit Abstand vom Rahmen 8, so daß sich die Rückwand 2 flankierende, seitliche Spalte 10 ergeben. Im Bereich der seitlichen Trägerflanken ergeben sich dementsprechend von der Rückwand 2 durch die Spalte 10 abgesetzte, nach hinten offene Winkelprofilstücke 11 , deren durch die seitlichen Schenkel von Blendrahmen 6 und Rahmen 8 gebildete Schenkel lediglich an ihren Enden in die auf ihrer ganzen Länge mit der Rückwand 2 verbundenen Längsschenkel des Blendrahmens 6 bzw. Rahmens 8 übergehen. Diese seitlichen Winkelprofilstücke 11 besitzen dementsprechend eine hohe Elastizität und können gegenüber der Rückwand 2 federnd nach außen gebogen werden.

Im Bereich der zu den Winkelprofilstücken 11 senkrechten, längsverlaufenden Trägerflanken ergeben sich längsverlaufende, mit ihren offenen Querschnitten einander zugewandte Nuten 12 bzw. 13, die nach hinten durch eine breite, mit den Versteifungsrippen 4 niveaugleiche Randleiste 14, nach vorne durch die mit der Rückwand 2 verstegten Längsschenkel 15 des Blendrahmens 6 und nach außen, d.h. nach unten bzw. oben, durch den die Rückwand 2 mit dem Blendrahmen 6 verbindenden Steg 9 bzw. den als Steg ausgebildeten Bereich des Rahmens 8 begrenzt sind. Die Nuten 12, 13 fungieren als Einsteckkanäle zur Aufnahme des Kennzeichenschilds 5. Die Tiefe T12 der entlang der unteren Trägerflanke vorgesehenen Nut 12 ist hier größer als die Tiefe T13 der entlang der oberen Trägerflanke vorgesehenen Nut 13. Der untere Längsschenkel 15 des Blendrahmens 6 besitzt dementsprechend eine vergleichsweise große Breite und kann daher als Werbefläche genutzt werden.

Der lichte Abstand A zwischen den unten durch den Steg 9 und oben durch den Rahmen 8 gebildeten Nutböden, also der Fußabstand der oberen und unteren Schenkel 15 des Blendrahmens 6, ist zumindest um die Tiefe T13 der seichteren Nut 13 größer als die Breite B des Kennzeichenschilds 5, die ihrerseits größer als die durch den lichten Abstand zwischen den oberen Schenkeln 15 des Blendrahmens 6 vorgegebene lichte Höhe h des Fensters 7 ist. Die Länge L des Schilds 5 ist im Bereich jeder seitlichen Trägerflanke um die Breite b der blendrahmenseitigen Schenkel der Winkelprofilstücke 11 länger als die durch den Abstand der blendrahmenseitigen Schenkel der Winkelstücke 11 vorgesehen, lichte Weite w des Fensters 7, so daß sich auch hier eine schmale seitliche Tafelsicherung ergibt. Die Breite b liegt dabei in der Größenordnung der Wanddicke des Randflansches 8, so daß eine ausreichende Elastizität der Winkelprofilstücke 11 gewährleistet bleibt.

In der dargestellten Montagestellung greift das Kennzeichenschild 5 mit seinem unteren und oberen Rand in die Nuten 12 bzw. 13 ein. Die seitlichen Ränder des Kennzeichenschildes 5 sind vom blendrahmenseitigen Schenkel der Winkelprofilstücke 11 übergriffen. Bei der Montage wird das Kennzeichenschild 5 zunächst mit seinem unteren Rand so weit in die tiefere, untere Nut 12 eingeführt, daß sich der obere Kennzeichenrand innerhalb der oberen Kante des Sichtfensters 7 befindet. Die seitlichen Winkelprofilstücke 11 werden dabei um die Breite b nach außen gebogen, was infolge der durch die Spalte 10 gegebenen Elastizität möglich ist. Anschließend wird das Kennzeichenschi ld 5 flächig in Anlage an der Rückwand 2 bzw. deren Versteifungsrippen 4 gebracht, wobei die Winkelprofilstücke 11 in ihre dargestellte Ausgangslage zurückschnappen können, in welcher sie die seitlichen Ränder des Kennzeichenschilds übergreifen. Anschließend wird das Kennzeichenschild 5 so weit hochgeschoben, daß es mit seinem oberen Rand in die obere Nut 13 eingreift und dort zur Anlage am durch den Rahmen 8 gebildeten Nutboden kommt.

In dieser Stellung wird das Kennzeichenschild 5 durch Stützelemente 16 gesichert, die den Abstand des unteren Rands des Kennzeichenschilds 5 vom benachbarten, durch den Steg 9 gebildeten Nutboden der unteren Nut 12 überbrücken. Die Stützelemente 16 werden durch im Bereich des unteren Trägerrands vorgesehene, in Figur 4 gezeigte Ausnehmungen 17 von unten in den Träger 1 eingesetzt. Die Achse der Ausnehmungen 17 verläuft dabei parallel zur Fenster- bzw. Schildebene, so daß sich eine dementsprechende Einschubrichtung und Kraftrichtung ergeben. Entlang des die tiefere Nut 12 enthaltenden, unteren Trägerrands können dabei mehrere Stützelemente 16 vorgesehen sein. In der Regel reichen zwei Stützelemente 16 aus, die so über die Länge des unteren Trägerrands verteilt sein können, daß ihr gegenseitiger Abstand dem doppelten ihres Abstands von den Seitenflanken entspricht.

Mit Hilfe der Stützelemente 16 kann das Kennzeichenschild 5 mit Vorspannung an den oberen Nutboden angepreßt werden. Hierzu sind die Stützelemente 16 im dargestellten Ausführungsbeispiel als Feder- und Rastelemente ausgebildet, die von unten in den Träger 1 einrastbar sind und dabei in federnde Anlage am unteren Rand des Kennzeichenschilds 5 kommen. Im dargestellten Beispiel sind die als Rast- und Federelemente ausgebildeten Stützelemente 16 in Form eines in sich geschlossen umlaufenden, unausgefachten Rahmens 18 ausgeführt, dessen vorderer Schenkel 19 dachförmig konfiguriert ist. Ein derartiges Rahmenteil besitzt zwar eine gewisse Elastizität, so daß sich Toleranzen in der Breite des Kennzeichenschilds 5 ohne weiteres ausgleichen lassen, aber infolge der Formsteifigkeit auch eine vergleichsweise steile Federcharakteristik, so daß eine kräftige, quasistarre Einspannung des Kennzeichenschilds 5 erreicht werden kann. Die seitlichen Schenkel 20 des Rahmenteils 18 sind mit seitlich vorstehenden Rastzähnen 21 versehen, die eine Abstützung am inneren Rand der zugeordneten Ausnehmung 17 ermöglichen. Im dargestellten Ausführungsbeispiel sind auf jeder Seite jeweils zwei hintereinander angeordnete Rastzähne 21 vorgesehen. Hierdurch ist es möglich, das Rahmenteil 18 zunächst nur bis zum Einrasten des vorderen Rastzahns einzuschieben, womit eine verliersichere, aber das Einführen des Kennzeichenschilds 5 in die untere Nut 12 noch nicht behindernde Vormontage des Rahmenteils 18 ermöglicht wird. Zur Fixierung des Kennzeichenschilds 5 brauchen daher die bereits vormontierten Rahmenteile 18 nur noch so weit vorgeschoben werden, bis die hinteren Rastzähne 21 einrasten. Dabei läuft der Kamm des dachförmigen, vorderen Schenkels 18 federnd am zugewandten Rand des Kennzeichenschilds 5 an. Der Abstand der Stützfläche der hinteren Rastzähne 21 vom vorderen Kamm des dachförmigen Schenkels 19 ist im unverformten Zustand zumindest um die hinsichtlich der Schilderbreite üblicherweise zu berücksichtigende Toleranz größer als der theoretische Abstand zwischen unterem Schilderrand und unterem Nutboden.

Der die Ausnehmung 17 begrenzende Rahmenbereich ist massiv ausgebildet. Hierzu sind im dargestellten Ausführungsbeispiel, wie die Figuren 1 und 3 zeigen, der Steg 9 und der diesen mit Abstand untergreifende Rahmen 8 durch eine Füllung 22 überbrückt, so daß sich ein massiver, umlaufender Ausnehmungsrand ergibt, auf dem die Rastzähne 21 eine zuverlässige Abstützung finden. Die Dicke der Rahmenteile 18 und dementsprechend die lichte Weite der zugeordneten Ausnehmungen 19 entspricht der lichten Weite der zugeordneten, unteren Nut 12, die dementsprechend von den eingesetzten Stützelementen 16 voll überbrückt wird, womit eine zuverlässige Krafteinleitung in den unteren Schilderrand gewährleistet ist, dessen Dicke ebenfalls praktisch der lichten Nutweite entsprechen kann. Die Länge der Ausnehmungen 17 entspricht dem Abstand der Außenkanten der seitlichen Schenkel 20 der Rahmenteile 18. Im dargestellten Ausführungsbeispiel sind, wie die Figuren 1 und 4 zeigen, von den Seitenflanken der Ausnehmungen 17 ausgehende, ihre Länge vergrößernde Kerben 23 vorgesehen, deren Weite schmäler als die Weite der Ausnehmungen 17 ist. Diese Kerben ermöglichen die Einführung einer Schraubenzieherklinge etc., mit welcher die Rastzähne 21 außer Rasteingriff mit dem Ausnehmungsrand gebracht und dementsprechend die Stützelemente 16 demontiert werden können. Die Kerben 23 gehen hier ganz durch den massiven Ausnehmungsrand durch, so daß ein eingeführter Schraubenzieher in direkten Eingriff mit dem betreffenden Rastzahn 21 gebracht werden kann.

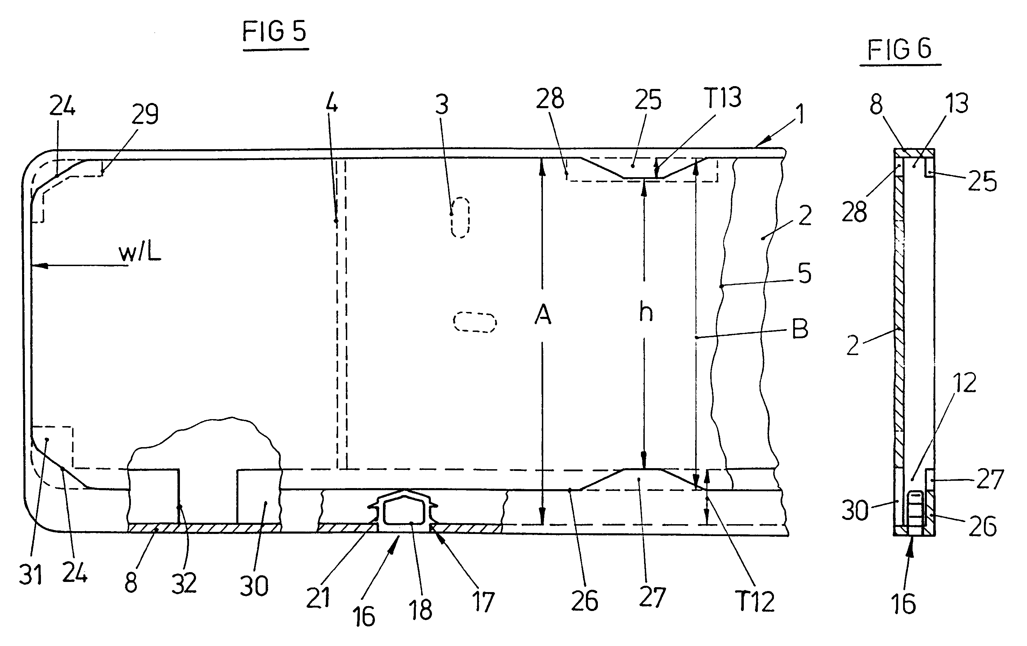

Die Ausführung gemäß Figuren 5 und 6 entspricht vom grundsätzlichen Aufbau her der Ausführung gemäß Figuren 1 bis 4. Nachstehend werden daher in erster Linie nur noch die Unterschiede beschrieben, wobei für gleichbleibende Teile gleiche Bezugszeichen wie in der obigen Beschreibung der Ausführung gemäß Figuren 1 bis 4 Verwendung finden.

Der Träger 1 besteht wiederum aus einer massiven, mit einem Lochbild 3 und Rippen 4 versehenen Rückwand 2 und einem diese umfassenden, umlaufenden Rahmen 8, der die äußere Trägerbegrenzung bildet. Anstelle einer durchgehenden Rückwand könnten auch mehrere, voneinander distanzierte Stege vorgesehen sein.

Die im Bereich der Rahmenvorderseite vorgesehene, rückwandparallele Flanschanordnung besteht hier zum einen aus im Bereich der Rahmenecken vorgesehenen Ecklaschen 24, die gleichzeitig eine Versteifung des Rahmens 8 bewirken. Der obere, stützelementlose Schenkel des Rahmens 8 trägt eine oder mehrere, hier eine auf halber Länge angeordnete, rückwandparallele Zunge 25, die zusammen mit den oberen Ecklaschen 24 den oberen Einsteckkanal 13 nach vorne begrenzt, wie am besten aus Figur 6 erkennbar ist. Die im Bereich des unteren, die Stützelemente 16 aufweisenden, Schenkels des Rahmens 8 vorgesehene, rückwandparallele Flanschanordnung, welche gemäß Figur 6 den unteren Einsteckkanal 12 nach vorne begrenzt, enthält eine die beiden unteren Ecklaschen 24 miteinander verbindende, über die ganze Rahmenlänge durchgehende Blendleiste 26, die mit wenigstens einer Erhöhung, hier in Form einer der oberen Zunge 25 gegenüberliegenden Zunge 27, versehen ist.

Die vergleichsweise breite Blendleiste 26 fungiert als Abdeckung und rückwandparallele Führung für die von unten in zugeordnete Ausnehmungen 17 des unteren Schenkels des Rahmens 8 einsetzbaren Stützelemente 16, die im vorliegenden Beispiel ebenfalls als jeweils durch ein in sich geschlossenes, unausgefachtes Rahmenteil 18 gebildete Feder- und Rastelemente ausgebildet sind. Die Breite der Blendleiste 26 entspricht etwa der Eingriffstiefe der Stützelemente 16, d.h. dem Untermaß des im Träger 1 aufnehmbaren Tafelelements 5 gegenüber dem Abstand der oberen und unteren Schenkel des Rahmens 8, d.h. gegenüber dem Fußabstand von Zunge 25 und Blendleiste 26. Der lichte Abstand h zwischen oberer Zunge 25 und unterer Zunge 27 ist kleiner als die Breite b des Tafelelements 5, die hier dem lichten Abstand zwischen dem oberen Schenkel des Rahmens 8 und der zugewandten Kante der Blendleiste 26 in etwa entspricht. Der untere Einsteckkanal, in den die Stützelemente 16 eingreifen, ist tiefer als der obere Einsteckkanal 13, wie anhand der Maßpfeile bei T12 und T13 erkennbar ist. Die Differenz entspricht der Breite der Blendleiste 26, die dem Übermaß des Fußabstands A gegenüber der Breite B des Tafelelements 5 entspricht. Die Blendleiste 26 eignet sich infolge ihrer vergleichsweise großen Breite auch als Werbeträger. Der Abstand w der bis auf die zugehörigen Bereiche der Ecklaschen 24 praktisch flanschlosen, seitlichen Schenkel des Rahmens 8 entspricht hier in etwa der Länge L des Tafelelements 5.

Bei der Montage des Tafelelements 5 wird dieses, wie beim obigen Beispiel , zunächst mit seinem unteren Rand in den unteren Einsteckkanal 12 eingeschoben, bis sein oberer Rand über die obere Flanschanordnung, hier in Form der oberen Ecklaschen 24 und der Zunge 25, hinweggeht und es in eine rückwandparallele Position kommt. Anschließend wird das Tafelelement 5 nach oben gerückt, wobei auch sein oberer Rand durch die obere Flanschanordnung übergriffen wird. In dieser Position wird das Tafelelement 5 durch die von unten eindrückbaren Stützelemente 16 gesichert, die infolge ihrer Federwirkung eine gewisse Vorspannung ermöglichen und infolge des vorgesehenen Rastverschlusses leicht montierbar sind.

Zur Vereinfachung der Herstellung des hier vorliegenden Trägers 1 ist die Rückwand 2 im Bereich der Elemente der Flanschanordnungen der unteren und oberen Schenkel des Rahmens 8 ausgenommen. Auf diese Weise werden Hinterschneidungen vermieden, was die Spritzgußform vereinfachen kann. Im Bereich der Zunge 25 des oberen Schenkels des Rahmens 8 und der oberen Ecklaschen 24 genügen, wie Figur 5 zeigt, langlochartige Ausnehmungen 28 bzw. 29. Im Bereich der unteren Flanschanordnung ist die Rückwand 2 durch einen breiten Schlitz 30, der im Bereich der unteren Ecklaschen 24 Verbreiterungen 31 aufweist, vom Rahmen 8 abgesetzt. Der untere Rahmenschenkel ist lediglich durch einige Stege 32 mit der Rückwand 2 verbunden.

Die Stützelemente 16, z.B. in Form der Rahmenteile 18, können bei jeder Ausführung aus Metall bestehen oder zweckmäßig einfach als Kunststoff-Spritzgußteile ausgebildet sein. Dasselbe gilt für den Träger 1.

Vorstehend wurden zwar besonders bevorzugte Ausführungsbeispiele der Erfindung näher erläutert, ohne daß jedoch hiermit eine Beschränkung verbunden sein soll. Vielmehr stehen dem Fachmann eine Reihe von Möglichkeiten zur Verfügung, um die Erfindung an die Verhältnisse des Einzelfalls anzupassen. So wäre es beispielsweise auch ohne weiteres möglich, die Stützelemente 16 als Bolzen mit ganz oder teilweise umlaufenden Rastkanten oder einfach als Schraubelemente auszubilden, die etwa mit Hilfe selbstschneidender Gewinde selbsthemmend in zugeordnete Ausnehmungen einschraubbar sein können.

## Patentansprüche

1. Vorrichtung zur Aufnahme eines Tafelelements (5), insbesondere einer KFZ-Kennzeichentafel, mit einem vorzugsweise einen umlaufenden Rahmen (8) und eine dessen Rückseite zumindest teilweise ausfachende Rückwand (2) aufweisenden Träger (1), der mit einander gegenüberliegenden, unterschiedlich tiefen Einsteckkanälen (12, 13) versehen ist, in welche das Tafelelement (5) mit einander gegenüberliegenden Rändern nacheinander zum Eingriff bringbar ist, wobei der in den tieferen Einsteckkanal (12) eingreifende Rand des Tafelelements (5) durch Stützelemente (16) vom benachbarten Kanalboden distanzierbar ist, **dadurch gekennzeichnet, daß** die Stützelemente (16) als in zugeordnete, trägerseitige Ausnehmungen (17), über welche der tiefere Einsteckkanal (12) von außen zugänglich ist, von außen mit zur Tafelelementebene paralleler Einführrichtung einsetzbare Einsätze ausgebildet sind, so daß das Tafelelement in der Einführrichtung der Einsätze durch diese selbst und senkrecht zur Tafelelementebene durch die Räuder der Einsteckkanäle in der Lage gesichert ist.

2. Vorrichtung nach Anspruch 1, **dadurch gekennzeichnet, daß** die Stützelemente (16), deren Dicke vorzugsweise der lichten Einsteckkanalweite entspricht, zumindest im Bereich ihres in Einfuhrrichtung vorderen Endes als Federelemente ausgebildet sind.

3. Vorrichtung nach einem der vorhergehenden Ansprüche, **dadurch gekennzeichnet, daß** die Stützelemente (16) als vorzugsweise federnde Rastelemente ausgebildet sind, die in die zugeordneten Ausnehmungen (17) vorzugsweise lösbar einrastbar sind.

4. Vorrichtung nach einem der vorhergehenden Ansprüche, **dadurch gekennzeichnet, daß** die Stützelemente (16) einen in sich geschlossenen umlaufenden, unausgefachten Rahmen (18) aufweisen, dessen in Einschubrichtung vorderer Schenkel (19) dachförmigen Verlauf aufweist und dessen seitliche Schenkel (20) parallel verlaufen und mit seitlich vorspringenden Rastzähnen (21) versehen sind, wobei vorzugsweise jeweils zumindest zwei hintereinander angeordnete Rastzähne (21) vorgesehen sind.

5. Vorrichtung nach einem der vorhergehenden Ansprüche, mit einem umlaufenden, den äußeren Trägerrand bildenden Rahmen (8), **dadurch gekennzeichnet, daß** der Rahmen (8) zumindest im Bereich der den Stützelementen (16) zugeordneten Ausnehmungen (17) hohlraumlos ausgebildet ist.

6. Vorrichtung nach einem der vorhergehenden Ansprüche, **dadurch gekennzeichnet, daß** die jeweils einem als Rastelement ausgebildete Stützelement (16) zugeordneten Ausnehmungen (17) wenigstens eine im Bereich des Ausnehmungsrands vorgesehene Kerbe (23) vorzugsweise zwei einander gegenüberliegende Kerben (23) aufweisen, die vorzugsweise über die ganze Wanddicke des mit einem Stützelement (16) zum Eingriff kommenden Wandbereichs reicht bzw. reichen.

7. Vorrichtung nach einem der vorhergehenden Ansprüche, **dadurch gekennzeichnet, daß** nur im Bereich des unteren Schenkels des Rahmens (8) mehrere, vorzugsweise zwei, jeweils einem Stützelement (16) zugeordnete Ausnehmungen (17) vorgesehen sind.

8. Vorrichtung nach einem der vorhergehenden Ansprüche, **dadurch gekennzeichnet, daß** der die einsetzbaren Stützelemente (16) aufnehmende, vorzugsweise untere Schenkels des Rahmens (8) eine den zugeordneten Einsteckkanal (12) nach vorne begrenzende Flanschanordnung aufweist, die eine durchgehende, vorzugsweise bereichsweise durch eine Zunge (27) erhöhte Blendleiste (26) enthält, die außerhalb der Erhöhung eine dem Untermaß des Tafelelements (5) gegenüber dem Abstand A der Kanalböden entsprechende Höhe aufweist, und daß der stützelementlos, vorzugsweise obere Schenkel des Rahmens (8) eine durch wenigstens eine Zunge (25) gebildete, den zugeordneten Einsteckkanal (13) nach vorne begrenzende Flanschanordnung aufweist und daß vorzugsweise im Bereich der Rahmenecken eine durch Ecklaschen (24) gebildete, vordere Einsteckkanalbegrenzung vorgesehen ist.

9. Vorrichtung nach Anspruch 8 mit einer dem Rahmen (8) zumindest teilweise ausfachenden Rückwand (2), **dadurch gekennzeichnet, daß** die Rückwand (2) mit Ausnehmungen (28, 29, 30, 31) versehen ist, über welche die vorderen Einsteckkanalbegrenzungen von hinten zugänglich sind.

10. Vorrichtung nach einem der vorhergehenden Ansprüche 1 bis 7, **dadurch gekennzeichnet, daß** der Rahmen (8) zumindest im Bereich der Einsteckkanäle (12, 13) mit diese nach vorne verschließende Flanschanordnungen bildenden, durchgehenden Blendleisten versehen ist, vorzugswei se einen umlaufenden Blendrahmen (6) aufweist, dessen Breite im Bereich der zu den einsteckkanalseitigen Schenkeln senkrechten Schenkel vorzugsweise etwa auf die Wanddicke reduziert ist.

11. Vorrichtung nach Anspruch 10, **dadurch gekennzeichnet, daß** die zu den einsteckkanalseitigen Rahmenschenkeln senkrechten Rahmenschenkeln federnd nachgiebig ausgebildet sind, vorzugsweise von einer den Rahmen (8) zumindest teilweise ausfachenden Rückwand (2) durch einen Spalt (10) distanziert sind.

12. Vorrichtung nach einem der vorhergehenden Ansprüche, **dadurch gekennzeichnet, daß** die Rückwand (2) mit in Einschubrichtung verlaufenden Rippen (4) und vorzugsweise mit hierzu niveaugleichen, hintere Einsteckkanalbegrenzungen bildenden Randleisten (14) versehen ist.

## Claims

1. A device for holding a tabular element (5), more particularly a motor vehicle license plate, comprising a carrier (1) preferably including a surrounding frame (8) and a back wall (2) at least partly filling the back side thereof, which carrier is provided with mutually opposite plug-in channels (12 and 13) of different depth, into which opposite edges of the tabular element (5) are able to be fitted one after the other, the edge fitting into the deeper plug-in channel (12) of the tabular element (5) being able to be spaced from the adjacent channel floor by support elements (16), characterized in that the support elements (16) are designed in the form of inserts able to be inserted from the outside with an insertion direction parallel to the plane of the tabular element into associated recesses (17) in the carrier, via which the deeper plug-in channel (12) is accessible from the outside, so that the tabular element is secured in position in the insertion direction of the inserts by itself and perpendicular to the plane of the tabular element by the edges of the plug-in channels.

2. The device as claimed in claim 1, characterized in that the support elements (16), whose thickness is preferably at least equal to the clearance width of the plug-in channel are designed in the form of spring elements at least at their end which is leading in the insertion direction.

3. The device as claimed in either one of the preceding claims, characterized in that the support elements (16) are designed in the form of preferably resilient detent elements, which are able to be snapped into the associated recesses (17), preferably in a detachable fashion.

4. The device as claimed in any one of the preceding claims, characterized in that the support elements (16) have a peripherally complete, unfilled surrounding frame (18), whose limb (19), which is to the front in the direction of insertion, has the form of a letter V and whose lateral limbs (20) extend in a parallel manner and are provided with laterally projecting detent teeth (21), preferably in each case at least two detent teeth (21) being provided one behind the other.

5. The device as claimed in any one of the preceding claims, comprising a surrounding frame (8) constituting the outer carrier edge, characterized in that, at least adjacent to the recesses (17) associated with the support elements (16), the frame (8) is designed without any cavity.

6. The device as claimed in any one of the preceding claims, characterized in that recesses (17) associated with a support element (16) designed in the form of a detent element possess at least one notch (23) provided adjacent to the edge of the recess and preferably two mutually opposite notches (23), which preferably extends or, respectively, extend over the full thickness of the wall part coming into engagement with a support element (16).

7. The device as claimed in any one of the preceding claims, characterized in that it is merely adjacent to the lower limb of the frame (8) that several and preferably two recesses (17) are provided, each associated with a support element (16).

8. The device as claimed in any one of the preceding claims, characterized in that the preferably lower limb, receiving the insertable support elements (16), of the frame (8) possesses a flange arrangement delimiting the associated plug-in channel (12) to the front, such flange arrangement having a continuous cover rail (26), which is preferably raised in parts by a lug (27) and which outside the raised part possesses a height corresponding to the undersize amount of the spacing A of the channel floors, in that the preferably upper limb, which is free of support elements, of the frame (8) possesses a flange arrangement delimiting the associated plug-in channel to the front and constituted by at least one lug (25) and in that preferably adjacent to frame corners a front plug-in channel limit is constituted by corner lugs (24).

9. The device as claimed in claim 8 comprising a rear wall (2) at least partly filling the frame (8), characterized in that the rear wall (2) is provided with recesses (28, 29, 30 and 31) through which the front plug-in channel limits are accessible from the rear.

10. The device as claimed in any one of the preceding claims 1 through 7, characterized in that at least adjacent to the plug-in channels (12 and 13) the frame (8) is provided with continuous cover rails (6) constituting flange arrangements shutting off the channels at the front and preferably possesses a surrounding cover frame (6), whose width adjacent to the limbs perpendicular to the limbs on the plug-in channel side is preferably reduced to about the wall thickness.

11. The device as claimed in claim 10, characterized in that the frame limbs perpendicular to the frame limbs on the plug-in channel side frame limbs are resilient in design and are preferably spaced from a rear wall (2), at least partly filling out the frame (8), by a gap (10).

12. The device as claimed in any one of the preceding claims, characterized in that the rear wall (2) is provided with ribs (4) extending in the direction of insertion and preferably with edge rails (14) constituting rear plug-in channel limits at the same level.

## Revendications

1. Dispositif de réception d'une plaque (5), en particulier d'une plaque d'immatriculation de véhicule automobile, comportant un support (1) présentant de préférence un cadre périphérique (8) et une paroi arrière (2) saillant au moins partiellement dans sa partie arrière, le support étant pourvu de canaux d'enfichage (12, 13) de profondeurs différentes en regard l'un de l'autre, dans lesquels la plaque (5) peut être engagée sur des bords en regard l'un de l'autre successivement, le bord de la plaque (5) engagé dans le canal d'enfichage le plus profond (12) pouvant être écarté par des éléments d'appui (16) du fond du canal voisin, caractérisé en ce que les éléments d'appui (16) se présentent sous la forme de pièces rapportées qui peuvent être placées de l'extérieur dans des évidements (17) côté support qui leur sont affectés et par lesquelles le canal d'enfichage le plus profond (12) est accessible de l'extérieur, ces pièces rapportées étant insérées dans la direction d'insertion parallèle au plan de la plaque, de telle sorte que la plaque soit fixée en place dans la direction d'insertion des pièces rapportées par celles-ci mêmes et perpendiculairement au plan de la plaque par les bords des canaux d'enfichage.

2. Dispositif selon la revendication 1, caractérisé en ce que les éléments d'appui (16), dont l'épaisseur correspond de préférence à la largeur d'ouverture des canaux d'enfichage, se présente sous la forme d'éléments élastiques au moins dans la zone de leur extrémité antérieure dans la direction d'insertion.

3. Dispositif selon l'une quelconque des revendications précédentes, caractérisé en ce que les éléments d'appui (16) se présentent sous la forme d'éléments d'encliquetage de préférence élastiques, qui peuvent être encliquetés de préférence de manière amovible dans les évidements (17) qui leur sont affectés.

4. Dispositif selon l'une quelconque des revendications précédentes, caractérisé en ce que les éléments d'appui (16) présentent un cadre (18) périphérique, non saillant, fermé en soi dont la branche (19) antérieure dans la direction d'insertion présente un partie en forme de toit et dont les branches latérales (20) s'étendent parallèlement et sont pourvues de dents d'encliquetage faisant saillie latéralement (21), de préférence au moins deux dents d'encliquetage agencées l'une derrière l'autre (21) étant prévues respectivement.

5. Dispositif selon l'une quelconque des revendications précédentes, comportant un cadre (8) périphérique formant le bord externe du support, caractérisé en ce que le cadre (8) se présente sous une forme non creuse au moins dans la zone des évidements (17) affectés aux éléments d'appui (16).

6. Dispositif selon l'une quelconque des revendications précédentes, caractérisé en ce que les évidements (17) affectés respectivement à un élément d'appui (16) conformé en élément d'encliquetage présentent au moins une encoche (23) prévue dans la zone du bord de l'évidement, de préférence deux encoches (23) en regard l'une de l'autre, qui s'étend ou s'étendent de préférence sur toute l'épaisseur de la zone de la paroi coopérant avec un élément d'appui (16).

7. Dispositif selon l'une quelconque des revendications précédentes, caractérisé en ce que plusieurs, de préférence deux, évidements (17) affectés respectivement à un élément d'appui (16) ne sont prévus que dans la zone de la branche inférieure du cadre (8).

8. Dispositif selon l'une quelconque des revendications précédentes, caractérisé en ce que la branche inférieure du cadre (8) recevant les éléments d'appui rapportés (16), de préférence la branche inférieure, présente un agencement à bride délimitant vers l'avant le canal d'enfichage affecté (12), cet agencement contenant une latte aveugle (26) continue surélevée de préférence de manière limitée par une languette (27), laquelle latte présente, en dehors du surélèvement, une hauteur correspondant à la sous-dimension de la plaque (5) vis-à-vis de la distance A des fonds des canaux, et la branche du cadre (8) sans élément d'appui, de préférence la branche supérieure, présente un agencement à bride formé par au moins une languette (25) délimitant vers l'avant le canal d'enfichage affecté (13) et, de préférence, au voisinage des coins du cadre, il est prévu une délimitation du canal d'enfichage antérieur formée par des éclisses d'angle (24).

9. Dispositif selon la revendication 8 comportant une paroi arrière (2) ressortant au moins partiellement du cadre (8), caractérisé en ce que la paroi arrière (2) est pourvue d'évidements (28, 29, 30, 31) par lesquels les délimitations antérieures des canaux d'enfichage peuvent être accessibles par l'arrière.

10. Dispositif selon l'une quelconque des revendications 1 à 7, caractérisé en ce que le cadre (8) est pourvu, au moins dans la zone des canaux d'enfichage (12, 13), de lattes aveugles continues formant des agencements à bride fermant ces canaux vers l'avant, présente de préférence un cadre aveugle périphérique (6) dont la largeur, dans la zone de la branche perpendiculaire aux branches disposées côté canaux d'enfichage, est de préférence réduite plus ou moins sur l'épaisseur de la paroi.

11. Dispositif selon la revendication 10, caractérisé en ce que les branches du cadre perpendiculaire aux branches du cadre disposées côtés canaux d'enfichage sont conformées de manière élastique et sont écartées par un espace (10) de préférence d'une paroi arrière (2) ressortant au moins partiellement du cadre (8).

12. Dispositif selon l'une quelconque des revendications précédentes, caractérisé en ce que la paroi arrière (2) est pourvues de nervures (4) s'étendant dans la direction de l'enfichage et, de préférence, de lattes de bord (14) de même niveau que ces nervures et formant des délimitations postérieures des canaux d'enfichage.
